# EUROPÄISCHE PATENTANMELDUNG

(11) **EP 1 120 341 A2**
(43) Veröffentlichungstag der Anmeldung: **01.08.2001**
(21) Anmeldenummer: 00127503.1
(22) Anmeldetag: 15.12.2000
(51) Int. Cl.: B64D 9/00, G01M 1/12

(54) **Verfahren und Vorrichtung zum Bestimmen von Verladeparametern einer Luftfrachtverladeeinheit**

(30) Priorität: 25.01.2000 DE 10002957
(71) Anmelder: ABB PATENT GmbH, 68309 Mannheim (DE)
(72) Erfinder: Wäsch, Rainer, 64646 Heppenheim (DE)
(74) Vertreter: Miller, Toivo

(57) **Zusammenfassung**

Die Erfindung betrifft ein Verfahren zum Bestimmen von Verladeparametern einer Luftfrachtverladeeinheit (22) für deren Positionierung in dem Laderaum eines Flugzeuges, insbesondere eines Frachtflugzeuges, sowie eine entsprechend geeignete Vorrichtung zur Durchführung dieses Verfahrens, wobei der Flächenschwerpunkt und die Hüllkurve der Luftfrachtverladeeinheit (22) ermittelt werden und die ermittelten Kennwerte für die Luftfrachtverladeeinheit (22) mit den Kennwerten für den Laderaum und den aktuellen Beladungszustand des zu beladenden Flugzeuges korreliert werden und so die für die betreffende Luftfrachtverladeeinheit (22) vorgesehene Position im Laderaum bestimmt wird.

## Beschreibung

Die Erfindung betrifft ein Verfahren zum Bestimmen von Verladeparametern einer Luftfrachtverladeeinheit für deren Positionierung in dem Laderaum eines Flugzeuges, insbesondere eines Frachtflugzeuges.

Beim Beladen von Flugzeugen kommt es darauf an, daß die Verteilung der Lasten gleichmäßig ist, um das Flugzeug in einer stabilen Fluglage zu halten. Kleine Abweichungen können durch sogenanntes Trimmen der Tragflügel und der daran befindlichen Steuerflügel ausgeglichen werden. Größere Abweichungen infolge der Beladung mit Frachtgut kann nur bedingt mit den flugzeugeigenen Mitteln korrigiert werden. Hierfür ist es erforderlich, die Beladung gleichmäßig vorzunehmen, um so das Flugzeug zu trimmen.

Vorzugsweise erfolgt heutzutage die Beladung von Flugzeugen unter Verwendung von Luftfrachtverladeeinheiten - auch ULD (Unit Load Device) genannt. Bei den Luftfrachtverladeeinheiten handelt es sich um standardisierte Frachtbehälter, die zumindest einseitig offen sind für die Einbringung des Frachtgutes und deren Länge und Breite festgelegt und damit bekannt sind.

Das Trimming, das heißt das Ausbalancieren, eines Flugzeuges wird derzeit so durchgeführt, daß zunächst das Gesamtgewicht einer Luftfrachtverladeeinheit ermittelt wird und dann deren örtliche Anordnung im Laderaum anhand eines Plans bestimmt und darin erfaßt wird. An Stelle eines Plans wird hierzu häufig auch eine Liste verwendet, in welcher die jeweiligen möglichen Ladepositionen im Laderaum des betreffenden Flugzeuges aufgelistet sind.

Diese Verfahren haben mehrere Nachteile auf die im Folgenden eingegangen werden soll.

Aufgrund dessen, daß lediglich mit dem Gewicht und nicht mit dem Flächenschwerpunkt gearbeitet wird, ergibt sich zwangsläufig eine große Ungenauigkeit im Hinblick auf die vorgenommene Verteilung der Frachtbehälter, da diese erfahrungsgemäß nicht gleichförmig beladen sind.

So wird darüber hinaus auch nicht das Höhenprofil der Luftfrachtverladeeinheiten berücksichtigt, was bei Frachtflugzeugen mit zwei Ladeebenen dazu führen kann, daß Luftfrachtverladeeinheiten, die beispielsweise für die untere Ebene vorgesehen waren und auch so im Trimmingplan berücksichtigt wurden, dort nicht platziert werden können, weil sie eventuell zu hoch sind. Diese Erkenntnis gewinnt man jedoch erst unmittelbar vor Ort. Das Ladeteam ist dann gezwungen, abweichend vom ursprünglichen Trimmingplan vorzugehen und das Trimming zu modifizieren, was dann zwangsläufig die bestehende Ungenauigkeit vergrößert.

Insbesondere ist hierbei zu berücksichtigen, daß aufgrund der Krümmung der Außenwand des jeweiligen Flugzeuges die Positionierung der Luftfrachtverladeeinheit in der ursprünglich geplanten Orientierung nicht möglich ist, sondern zum Beispiel eine Teildrehung um die Hochachse erfordert, damit die Luftfrachtverladeeinheit noch in den Laderaum paßt. Hierdurch kann sich aber der Schwerpunkt der Luftfrachtverladeeinheit verlagern und damit zu einem anderen Drehmoment des Flugzeuges führen, was ungünstig ist und mittels Trimming zu korrigieren ist.

Weiterhin gilt zu beachten, daß das manuelle Trimming sehr viel Zeit in Anspruch nimmt, so daß unter Umständen wegen des späten Trimmings ein verspäteter Abflug des Frachtfliegers resultiert, da mit dem Trimming erst begonnen werden kann, wenn alle Daten zur Verfügung stehen.

Ausgehend von diesem Stand der Technik ist es Aufgabe der Erfindung, ein Verfahren der eingangs genannten Art weiterzubilden, welches auf einfache Weise die Möglichkeit bietet, eine möglichst gleichförmige Beladung von Flugzeugen ohne Zeitverzug zu erreichen.

Diese Aufgabe wird erfindungsgemäß durch die kennzeichnenden Merkmale des Anspruchs 1 gelöst. Weitere vorteilhafte Ausgestaltungen und Verbesserungen der Erfindung sind Gegenstand der Unteransprüche.

Demgemäß ist vorgesehen, daß der Flächenschwerpunkt und die Hüllkurve der Luftfrachtverladeeinheit ermittelt werden, daß die ermittelten Kennwerte für die Luftfrachtverladeeinheit mit den Kennwerten für den Laderaum und den aktuellen Beladungszustand des zu beladenden Flugzeuges korreliert werden und die für die betreffende Luftfrachtverladeeinheit vorgesehene Position im Laderaum bestimmt wird.

Mit Hilfe dieser Maßnahme, welche die erhaltenen Informationen datentechnisch umsetzt und verarbeitet, kann die optimale Lastenverteilung praktisch in sehr kurzer Zeit, gegebenenfalls noch unmittelbar vor dem Beladungsvorgang ermittelt und anschließend entsprechend realisiert werden, wobei die Größenunterschiede des Frachtgutes berücksichtigt werden.

Entsprechend einer vorteilhaften Weiterbildung des erfindungsgemäßen Verfahrens werden zunächst die Hüllkurve der Luftfrachtverladeeinheit und dann deren Flächenschwerpunkt bestimmt. Hieraus läßt sich dann für jede Luftfrachtverladeeinheit die optimale zutreffende Ladeposition im Laderaum des Flugzeuges bestimmen.

In weiterer bevorzugter Weiterbildung des erfindungsgemäßen Verfahrens erfolgt die Bestimmung des Flächenschwerpunktes vorteilhafterweise durch Auswertung der Meßergebnisse von wenigstens 4 verschiedenen Wägepunkten, welche im Abstand zueinander auf einer Aufstandsfläche angeordnet sind, auf welche die zu erfassende Luftfrachtverladeeinheit zumindest für die Dauer des Meßvorgangs abgestellt wird.

Hierbei können entsprechend einer vorteilhaften Ausgestaltung des erfindungsgemäßen Verfahrens die an den einzelnen Wägepunkten erfaßten Meßwerte unter Bezugnahme auf deren geometrische Zuordnung miteinander korreliert werden, wobei hieraus der Flächenschwerpunkt ermittelt wird.

Günstigerweise ist das erfindungsgemäße Verfahren derart ausgebildet, daß die Hüllkurve der Luftfrachtverladeeinheit berührungslos, vorzugsweise optisch, ermittelt wird. Entsprechend dieser Vorgabe ist in weiterer Verbesserung des erfindungsgemäßen Verfahrens vorgesehen, daß für die Bestimmung der Hüllkurve die betreffende Luftfrachtverladeeinheit gleichförmig in die hierfür vorgesehene Meßanordnung bewegt wird, daß beim Eintritt der Luftfrachtverladeeinheit in den von der Meßanordnung erfaßten Meßbereich ein Auslösesignal ausgelöst wird, welches mit der Bewegung der Fördereinrichtung für die Luftfrachtverladeeinheit korreliert wird und hierbei deren Halteposition innerhalb der Aufstandsfläche ermittelt, an welchem die Luftfrachtverladeeinheit gestoppt wird.

Eine Vorrichtung zur Durchführung des erfindungsgemäßen Verfahrens ist in an sich bekannter Weise mit einem als ETV (Elevating Transfer Vehicle) bezeichneten Regalbediengerät mit einem Fahrrahmen ausgerüstet, über welches jeweils die Ein- und Auslagerung von Luftfrachtverladeeinheiten von und zu dem betreffenden Flugzeug erfolgt sowie mit einer Fördereinrichtung für die Luftfrachtverladeeinheiten.

Hierbei liegt die Aufgabe zugrunde, die bekannte Vorrichtung so weiterzubilden, daß das erfindungsgemäße Verfahren auf einfache Weise durchführbar ist.

Zur Lösung dieser Aufgabe ist erfindungsgemäß das Regalbediengerät mit einem Rollendeck, mit optischen Tastern sowie mit einer Wägeeinrichtung für die zu lagernden Luftfrachtverladeeinheiten versehen. Dabei dient als Fördereinrichtung ein in dem Rollendeck integrierter Rollenförderer. Ferner ist eine Rechnereinheit vorgesehen, welche die in dem Regalbediengerät ermittelten Meßwerte verarbeitet.

Gemäß einer vorteilhaften Ausgestaltung der erfindungsgemäßen Vorrichtung ist die Hubplattform des Regalbediengerätes vom Rollendeck entkoppelt. Außerdem ist an jeder der 4 Ecken des Rollendecks jeweils eine Wägezelle angeordnet, die auf der Hubplattform aufliegt und mit einem zugeordneten Wägecontroller zusammenarbeitet, der seinerseits als Schnittstelle für eine hiermit verbindbare Rechnereinheit dient.

Bevorzugterweise ist das dem Regalbediengerät zugeordnete Rollendeck mit einer Seitenlänge von wenigstens 10 ft gestaltet, wobei gemäß einer vorteilhaften Weiterbildung zwei Rollendecks mit einer Seitenlänge von je 10 ft hintereinander angeordnet sind. Damit ergibt sich eine Gesamtlänge zur Erfassung der zu ermittelnden Verladeparameter von 20 ft.

Eine weitere Ausführungsform der Erfindung ist dadurch gekennzeichnet, daß an der Zugangsseite jedes Rollenförderers optische Sensoren angeordnet sind, welche zur Erfassung der Umrisse einer Luftfrachtverladeeinheit dienen.

Hierbei erweist es sich als günstig, wenn die optischen Sensoren eine vertikale Ebene erfassen, die sich entsprechend einer Weiterbildung vorteilhafterweise quer zur Fortbewegungsrichtung der Luftfrachtverladeeinheit erstreckt.

Gemäß einer weiteren Ausgestaltung der Erfindung können alternativ oder zusätzlich horizontal wirksame optische Sensoren vorgesehen sein, welche insbesondere zur Erfassung des Höhenprofils der Luftfrachtverladeeinheiten dienen.

Die gemäß der Erfindung zum Einsatz kommenden optischen Sensoren sind vorteilhafterweise als Lichtschrankenanordnungen gestaltet, welche einen Vorhang bilden, der von dem Frachtgut durchfahren wird und so ermöglicht, die Verladeparameter zu erfassen.

Gemäß einer weiteren Verbesserung der Erfindung arbeitet der Antriebsmotor des Rollenförderers mit einem Inkrementalgeber zusammen, welcher zur Ermittlung der Position einer vom Rollenförderer bewegten Luftfrachtverladeeinheit auf dem Rollendeck dient.

Diese und weitere vorteilhafte Ausgestaltungen und Verbesserungen der Erfindung finden sich in der nachfolgenden Beschreibung eines Ausführungsbeispieles.

Aus der JP 5-185995 A ist ein System zur Erstellung eines Ladeplanes für Luftfracht bekannt, welche in einem Behälter in ein Flugzeug eingeladen wird. Hierbei werden so wesentliche Informationen wie Nummer des Behälters, Flugnummer des Flugzeuges und Bestimmungsort des Behälters in einem Rechner erfaßt, während das Gewicht des beladenen Behälters von einer Waage ermittelt wird. Ein Ladeplan, der bestimmten Anforderungen entspricht, so zum Beispiel Schwerpunkt des Flugzeuges, Zielort eines Behälters und dessen Kontur wird unter Zugrundelegung des Gesamtgewichts des Behälters im Zentralrechner errechnet und von diesem ausgegeben. Entsprechend diesem Ladeplan wird der Behälter dann verladen.

Unberücksichtigt bleibt bei diesem bekannten System allerdings der aktuelle Beladungszustand des Fluzeuges und dessen freies Ladegewicht sowie die aktuelle Lastenverteilung im Flugzeug, was letztlich dazu führt, daß trotz des intensiven Rechnereinsatzes ein besonderes Trimmen des Flugzeuges unerläßlich ist.

Anhand eines in der beigefügten Zeichnung dargestellten Ausführungsbeispieles sollen die Erfindung, vorteilhafte Ausgestaltungen und Verbesserungen sowie weitere Vorteile der Erfindung näher erläutert und beschrieben werden.

Es zeigen:
- Fig. 1: eine Draufsicht auf zwei hintereinander angeordnete Rollenförderdecks eines Regalbediengerätes gemäß der Erfindung;
- Fig. 2: eine Querschnittsansicht durch das Rollenförderdeck eines Regalbediengerätes gemäß Fig. 1;
- Fig. 3: eine schematische Darstellung des Systemaufbaus zur Erfassung und Bestimmung des Flächenschwerpunktes und des Profils einer auf dem Rollenförderdeck befindlichen Luftfrachtverladeeinheit;
- Fig. 4: das Ergebnis einer Berechnung des Flächenschwerpunktes einer Luftfrachtverladeeinheit und
- Fig. 5: das Ergebnis der Profilbestimmung einer Luftfrachtverladeeinheit.

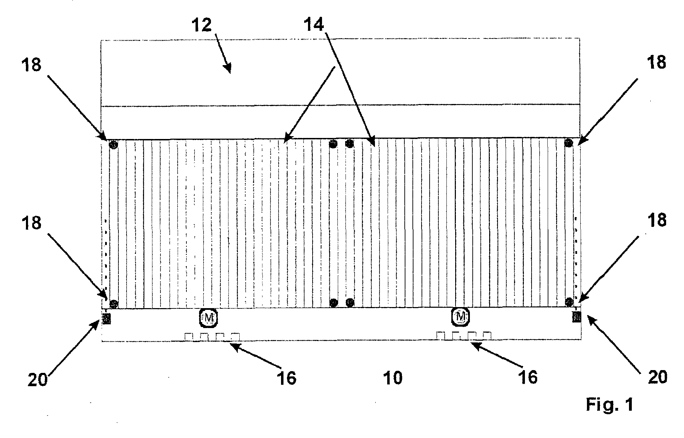

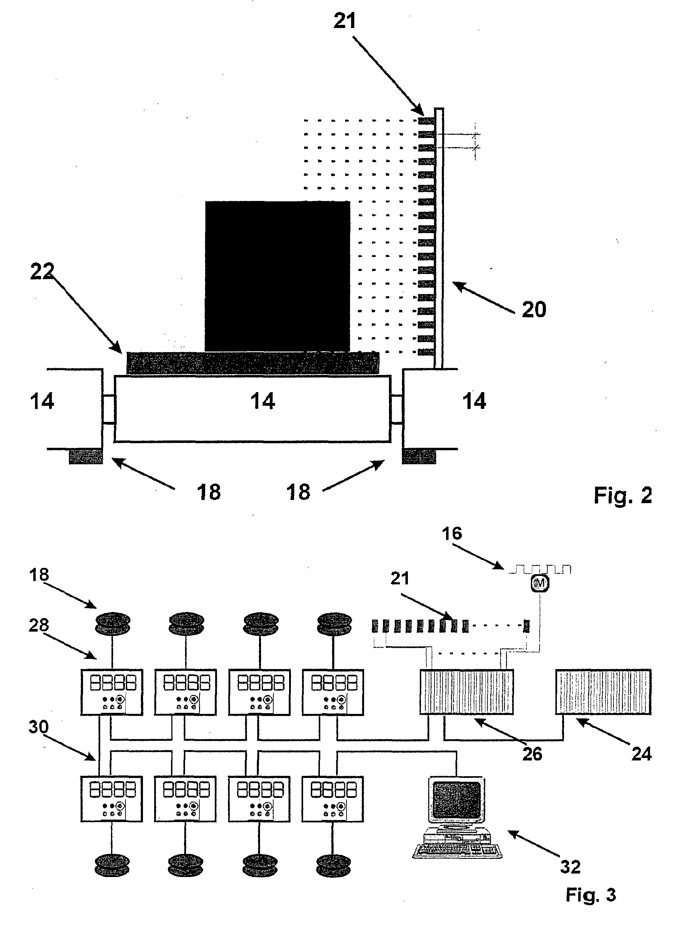

In Fig. 1 ist eine Draufsicht auf eine erfindungsgemäße Systemeinrichtung 10 mit zwei hintereinander angeordneten Rollenförderdecks 14 mit rechteckigem Grundriß eines Regalbediengerätes 12 gezeigt. Das Regalbediengerät 12 ist gemäß der Erfindung entsprechend den in Fig.1 eingetragenen Pfeilen von beiden Schmalseiten aus zugänglich und dient zur Aufnahme von hiermit zu erfassenden, hier nicht näher dargestellten Luftfrachtverladeeinheiten 22, wie sie beispielhaft in Fig. 2 schematisch gezeigt sind. Jeder der beiden Rollenförderer 14 ist mit einem Motor 16 ausgerüstet, der zum horizontalen Bewegen des auf dem Rollenförderdeck 14 abgestellten Förderguts dient und hierdurch einen weitgehend selbstätigen Ablauf des mit der Erfindung vorgesehenen Meß- und Erfassungsverfahrens ermöglicht.

Insbesondere zu dem letztgenannten Zweck ist jeder der Antriebsmotoren der Rollenförderer 14 mit einem hier nicht näher gezeigten Inkrementalgeber ausgestattet, der zur Erfassung des jeweils zurückgelegten Weges der darauf abgestellten Luftfrachtverladeeinheit 22 dient.

Ferner ist jedes Rollenförderdeck 14 auf an seinen Eckpunkten angeordneten Wägezellen 18 abgestützt, so daß die Gewichtskraft einer jeden auf das Rollenförderdeck 14 wirkenden Last zuverlässig erfaßt wird unabhängig davon, wo exakt auf dem 10-Fuß langen Rollenförderdeck 14 sich die betreffende Last befindet.

Eine weitere Erfassungseinrichtung ist von einer vertikalen Sensorleiste 20 gebildet, welche, wie in Fig. 2 schematisch dargestellt, zur Höhenerfassung der vorbei geförderten Luftfrachtverladeeinheit 22 dient und jeweils unmittelbar den Zugang zum Rollenförderer 14 abdeckt.

Fig. 2 zeigt einen Schnitt durch die Systemeinrichtung 10, genauer gesagt einen Querschnitt durch das Rollenförderdeck 14 des in Fig.1 dargestellten Regalbediengerätes 12. Anhand dieser Ansicht ist erkennbar, daß der Rollenförderer 14 bündig mit den benachbarten Bereichen angeordnet ist, so daß das zu erfassende Frachtgut praktisch auf gleicher Höhe wie der Vorbereich dem Rollenförderdeck 14 zugeführt wird.

Ferner ist die Wirkungsweise der vertikalen Sensorleiste 20 erkennbar, welche zur Erfassung des Höhenprofiles der Luftfrachtverladeeinheit 22 dient und von einzelnen vertikal übereinander befindlichen Strahlern beziehungsweise Sensoren 21 gebildet ist, welche die von den Strahlern emittierte Strahlung erfassen, soweit deren Strahlengang nicht durch die jeweilige Luftfrachtverladeeinheit 22 gestört ist. Hierbei sind zweierlei Möglichkeiten gegeben, nämlich einerseits Sensoren 21, welche nur den ungestörten Strahlengang abbilden, oder andererseits solche Sensoren 21, die lediglich die an der Luftfrachtverladeeinheit 22 zurückgeworfene Strahlung erfassen.

Hierzu sind die einzelnen Sensoren 21 entlang einer vertikalen Geraden auf der Sensorleiste 20 in definiertem Abstand zueinander angeordnet und räumlich exakt zugeordnet. Somit ist gewährleistet, daß das Signal eines bestimmten Sensors 21 problemlos seinem Ort zugeordnet werden kann.

In Fig. 3 ist eine schematische Darstellung des Aufbaus des erfindungsgemäßen Systems zur Erfassung und Bestimmung des Flächenschwerpunktes und des Profils einer auf dem hier nur symbolisch gezeigten Rollförderdeck 14 befindlichen Luftfrachtverladeeinheit 22 gezeigt.

Das System besitzt zwei separate Schnittstellen 24, 26 für jedes Rollenförderdeck 14, nämlich eine erste Schnittstelle 24 und eine zweite Schnittstelle 26, welche für die Einspeisung der Informationen des Inkrementalgebers des Fördermotors 16 am Rollförderdeck 14 und der Sensorleiste 20 dienen. Hierbei erfolgt an jeder der beiden Schnittstellen 24, 26 jeweils die Einspeisung der Informationen der Inkrementalgeber des Fördermotors 16 am Rollenförderdeck 14 und der Sensorleiste 20.

Es ist ferner vorgesehen, daß jede der vier zu einem Rollförderdeck 14 gehörigen Wägezellen 18 mit einem zugeordneten Controller 28 verbunden ist, der die per Busleitung 30 übermittelte Information über das örtlich gemessene Gewicht der auf dem Rollförderdeck 14 befindlichen Luftfrachtverladeeinheit 22 erfaßt, gegebenenfalls umwandelt und über die Busleitung 30 einem mit allen Wägezellen 18 verbundenen Auswertungsrechner 32 zuführt, der die Auswertung zur Bestimmung des Flächenschwerpunktes und des Höhenprofiles der Luftfrachtverladeeinheit 22 vornimmt.

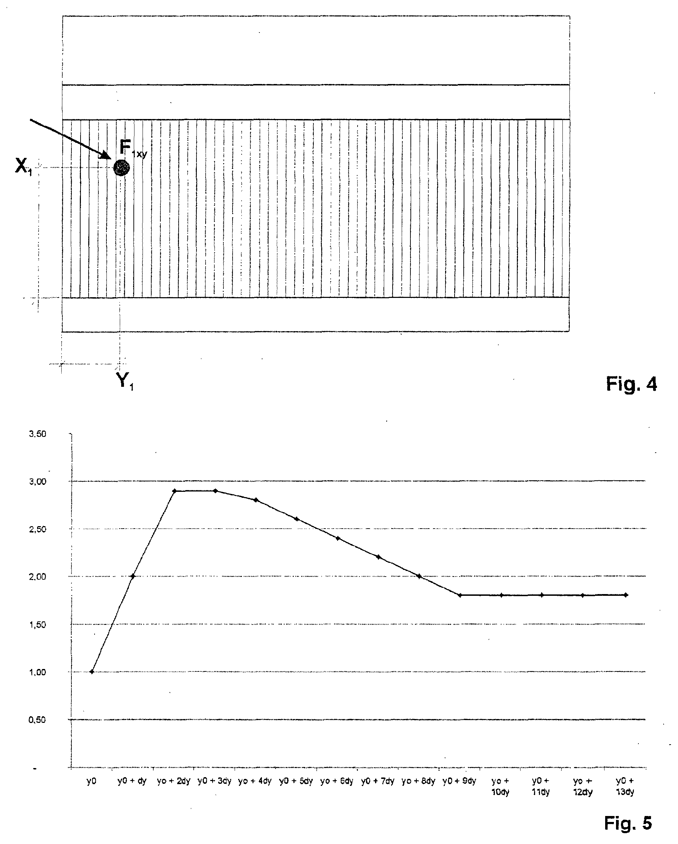

In Fig.4 ist in schematischer Weise das Ergebnis einer Berechnung des Flächenschwerpunktes einer Luftfrachtverladeeinheit 22 wiedergegeben. Der Flächenschwerpunkt F_{1xy} liegt im gezeigten Beispiel demgemäß exzentrisch, das heißt im Schnittpunkt der Schwerelinien X₁ und Y₁.

Diese Art der Darstellung ist wohl prinzipiell möglich, wird aber im praktischen Betrieb üblicherweise nicht zur Anzeige gelangen, sondern nur die hieraus abzuleitende Verladeposition des betreffenden Frachtgutes.

Fig. 5 schließlich zeigt das grafische Ergebnis der Profilbestimmung einer Luftfrachtverladeeinheit 22 in Längsrichtung, das heißt in Richtung der Förderbewegung der Luftfrachtverladeeinheit 22 auf dem Rollenförderer 14.

## Patentansprüche

1. Verfahren zum Bestimmen von Verladeparametern einer Luftfrachtverladeeinheit (22) für deren Positionierung in dem Laderaum eines Flugzeuges, insbesondere eines Frachtflugzeuges, dadurch gekennzeichnet, daß der Flächenschwerpunkt und die Hüllkurve der Luftfrachtverladeeinheit (22) ermittelt werden, daß die ermittelten Kennwerte für die Luftfrachtverladeeinheit (22) mit den Kennwerten für den Laderaum und den aktuellen Beladungszustand des zu beladenden Flugzeuges korreliert werden und die für die betreffende Luftfrachtverladeeinheit (22) vorgesehene Position im Laderaum bestimmt wird.

2. Verfahren nach Anspruch 1, dadurch gekennzeichnet, daß zunächst die Hüllkurve der Luftfrachtverladeeinheit (22) und dann deren Flächenschwerpunkt bestimmt werden.

3. Verfahren nach einem der vorherigen Ansprüche, dadurch gekennzeichnet, daß die Bestimmung des Flächenschwerpunktes durch Auswertung der Meßergebnisse von wenigstens 4 verschiedenen Wägepunkten (18) erfolgt, welche im Abstand zueinander auf einer Aufstandsfläche (14) angeordnet sind, auf welche die zu erfassende Luftfrachtverladeeinheit (22) zumindest für die Dauer des Meßvorgangs abgestellt wird.

4. Verfahren nach einem der vorherigen Ansprüche, dadurch gekennzeichnet, daß die an den einzelnen Wägepunkten (18) erfaßten Meßwerte unter Bezugnahme auf deren geometrische Zuordnung miteinander korreliert werden, und daß hieraus der Flächenschwerpunkt ermittelt wird.

5. Verfahren nach einem der Ansprüche 1 bis 3, dadurch gekennzeichnet, daß die Hüllkurve der Luftfrachtverladeeinheit (22) berührungslos, vorzugsweise optisch, ermittelt wird.

6. Verfahren nach Anspruch 5, dadurch gekennzeichnet, daß für die Bestimmung der Hüllkurve die betreffende Luftfrachtverladeeinheit (22) gleichförmig in die hierfür vorgesehene Meßanordnung bewegt wird, daß beim Eintritt der Luftfrachtverladeeinheit (22) in den von der Meßanordnung erfaßten Meßbereich ein Auslösesignal ausgelöst wird, welches mit der Bewegung der Fördereinrichtung für die Luftfrachtverladeeinheit (22) korreliert wird und deren Halteposition innerhalb der Aufstandsfläche (14) ermittelt.

7. Vorrichtung zur Durchführung des Verfahrens nach einem der vorherigen Ansprüche mit einem als ETV bezeichneten Regalbediengerät (12) mit einer Hubplattform, über welche jeweils die Ein- und Auslagerung von Luftfrachtverladeeinheiten (22) von und zu dem betreffenden Flugzeug vorgesehen ist, sowie mit einer Fördereinrichtung, dadurch gekennzeichnet, daß das Regalbediengerät (12) mit einem Rollendeck (14), mit optischen Tastern sowie mit einer Wägeeinrichtung (18) für die zu lagernden Luftfrachtverlacleeinheiten (22) versehen ist und daß als Fördereinrichtung ein in dem Rollendeck integrierter Rollenförderer (14) vorgesehen ist und daß eine Rechnereinheit vorgesehen ist, welche in dem Regalbediengerät (18) ermittelte Meßwerte verarbeitet.

8. Vorrichtung nach Anspruch 7, dadurch gekennzeichnet, daß die Hubplattform des Regalbediengerätes (12) vom Rollendeck (14) entkoppelt ist, daß an jeder der 4 Ecken des Rollendecks eine Wägezelle (18) angeordnet ist, die auf der Hubplattform aufliegt und mit einem zugeordneten Wägecontroller (28) zusammenarbeitet, der seinerseits als Schnittstelle für eine hiermit verbindbare Rechnereinheit (32) dient.

9. Vorrichtung nach Anspruch 8, dadurch gekennzeichnet, daß das dem Regalbediengerät (12) zugeordnete Rollendeck (18) eine Seitenlänge von wenigstens 10 ft aufweist.

10. Vorrichtung nach einem der Ansprüche 7 bis 9, dadurch gekennzeichnet, daß zwei Rollendecks (14) mit einer Seitenlänge von je 10 ft hintereinander angeordnet sind.

11. Vorrichtung nach einem der vorherigen Ansprüche 7 bis 10, dadurch gekennzeichnet, daß an der Zugangsseite jedes Rollenförderers (14) optische Sensoren (21) angeordnet sind, welche zur Erfassung der Umrisse einer Luftfrachtverladeeinheit (22) dienen.

12. Vorrichtung nach Anspruch 11, dadurch gekennzeichnet, daß die optischen Sensoren (21) eine vertikale Ebene erfassen.

13. Vorrichtung nach Anspruch 12, dadurch gekennzeichnet, daß die von den optischen Sensoren (21) erfaßte Ebene sich quer zur Fortbewegungsrichtung der Luftfrachtverladeeinheit (22) erstreckt.

14. Vorrichtung nach einem der Ansprüche 11 bis 13, dadurch gekennzeichnet, daß horizontal wirksame optische Sensoren vorgesehen sind.

15. Vorrichtung nach einem der vorherigen Ansprüche 11 bis 14, dadurch gekennzeichnet, daß die optischen Sensoren von Lichtschrankenanordnungen gebildet sind, welche einen Vorhang bilden.

16. Vorrichtung nach einem der vorherigen Ansprüche 7 bis 11, dadurch gekennzeichnet, daß der Rollenförderer (14) von einem Antriebsmotor (16) beaufschlagt ist, der mit einem Inkrementalgeber zusammenarbeitet, welcher zur Ermittlung der Position einer vom Rollenförderer bewegten Luftfrachtverladeeinheit (22) auf dem Rollendeck (14) dient.
